# FASCICULE DE BREVET EUROPEEN

(11) **EP 4 479 269 B1**
(45) Date de publication et mention de la délivrance du brevet: **25.02.2026**
(21) Numéro de dépôt: 23701533.4
(22) Date de dépôt: 24.01.2023
(51) Int. Cl.: B60L 53/35, H01R 13/62, B60L 53/16, H01R 43/26, H01R 13/66

(54) **PRISE À CONNEXION ÉLECTRIQUE RADIALE**
STECKDOSE MIT RADIALER ELEKTRISCHER VERBINDUNG
SOCKET WITH RADIAL ELECTRICAL CONNECTION

(30) Priorité: 14.02.2022 FR 2201248
(43) Date de publication de la demande: 25.12.2024
(73) Titulaire: SANSO LONGCHAMP ASSET MANAGEMENT, 75016 Paris (FR)
(72) Inventeur: LEFAUCHEUX, Antoine, 38000 Grenoble (FR); TROUFFLARD, Ronan, 38000 Grenoble (FR)
(74) Mandataire: INNOV-GROUP
(86) Numéro de dépôt international: PCT/EP2023/051672
(87) Numéro de publication internationale: WO 2023/151940

(56) Documents cités:
- EP-B1- 3 317 926
- WO-A1-2012/032230
- WO-A1-2017/046469
- WO-A1-2017/216458
- WO-A1-2020/229321
- DE-A1- 102020 116 623

## Description

### Domaine technique de l'invention

La présente invention concerne une prise à connexion électrique radiale, à un système de connexion électrique et à un procédé de connexion/déconnexion mis en œuvre dans un tel système.

### Etat de la technique

Il est connu de la demande de brevet WO2017/216458A1 un dispositif de connexion électrique qui se présente sous la forme d'un plateau intégrant une prise électrique à attraction magnétique. La prise électrique est positionnée au centre et le plateau présente une surface qui s'étend en périphérie de la face avant de connexion de la prise électrique. La prise électrique est dotée de moyens magnétiques lui permettant d'attirer, par effet magnétique, une fiche électrique dotée de moyens magnétiques correspondants. La connexion électrique est réalisée entre la prise et la fiche lorsque les deux éléments sont collés par l'effet magnétique. La fiche est raccordée à un appareil électrique, tel que par exemple un système d'alimentation d'un véhicule électrique. Dans une réalisation particulière, le dispositif comporte plusieurs bobines de forme annulaire qui sont intégrées au plateau en étant positionnées de manière concentrique autour de la prise électrique. En fonctionnement, le plateau intégrant la prise électrique est par exemple posé sur le sol et raccordé au secteur par un câble électrique. La fiche est libérée de l'appareil à proximité du plateau. Les bobines sont commandées par une séquence de commande adaptée pour guider la fiche vers le centre du plateau et donc vers la prise électrique. La connexion est concrétisée par l'attraction magnétique présente entre les moyens magnétiques respectifs de la prise et de la fiche.

La prise doit être conçue pour remplir plusieurs objectifs :
- Permettre une continuité électrique entre la fiche et la prise, en limitant les points chauds ;
- Masquer les contacts électriques de la prise lorsque la fiche n'est pas présente et lorsque la prise n'est pas utilisée ;
- Assurer un certain niveau d'étanchéité au liquide mais aussi aux poussières lorsque la prise n'est pas utilisée ;
- Empêcher l'accès aux contact électrique lorsque la fiche est connectée sur la prise ;
- Permettre un débranchement facile de la fiche, en limitant la force à exercer pour débrancher la fiche de la prise ;
- Assurer la protection des personnes en masquant les contacts électriques de la prise, même en cas d'arrachage de la fiche par rapport à la prise ;

Plusieurs solutions ont déjà été proposées dans l'état de la technique pour répondre à certains de ces objectifs.

Dans la demande de brevet WO2012/032230A1**,** la prise utilise des volets pivotants masquant les contacts électriques lorsque la fiche n'est pas connectée. Chaque volet est monté en pivotement sur un axe de manière indépendante et sollicité par un ressort. Lorsque les contacts électriques sont déplacés vers l'extérieur de la prise, ceux-ci poussent chacun un volet à l'encontre de son ressort.

Une autre solution a été décrite dans la demande de brevet WO2017/046469A1**,** dans laquelle la prise utilise également des volets pivotants. Ces volets sont déplacés par le chariot qui porte les contact électrique grâce à un mécanisme de came/suiveur de came. Dans les solutions antérieures, les contacts électriques sont souvent réalisés sous la forme de pinoches venant en appui contre un contact plat ou venant se loger dans une alvéole. Dans le premier cas, le contact électrique peut engendrer la présence de points chauds. Dans le deuxième cas, les alvéoles sont exposées à l'eau et aux poussières. Et comme le branchement est destiné à être réalisé de manière automatique (sans intervention extérieure), la juste indexation est également importante car chaque pinoche doit venir s'insérer dans une alvéole distincte.

Par ailleurs, l'architecture à volets pivotants qui est utilisée pour masquer les contacts électriques est complexe et fragile et ne permet pas de garantir une continuité de service au cours du temps. De plus, l'intégration d'une telle prise dans un dispositif tel que celui décrit dans la demande de brevet WO2017/216458A1 ne permet pas forcément de limiter l'accès aux contacts électriques lorsque la fiche est connectée sur la prise, ni de garantir l'étanchéité du dispositif.

La demande de brevet DE102020116623A1 décrit un système de connexion électrique utilisé dans une solution de recharge d'un véhicule électrique.

Un premier but de l'invention est donc de proposer un dispositif de connexion électrique qui comporte une prise dotée d'une architecture qui permet de remplir plusieurs des objectifs définis ci-dessus.

### Exposé de l'invention

Ce but est atteint par une prise à connexion électrique radiale, qui comporte :
- Un corps,
- Des moyens d'actionnement,
- Une unité de commande configurée pour contrôler lesdits moyens d'actionnement,
- Des premiers blocs de contact électrique logés dans ledit corps, destinés à être reliés à un système d'alimentation électrique et déplaçables en translation dans un même plan, dit plan de connexion, chacun suivant une direction radiale distincte,
- Une première architecture magnétique apte à assurer un collage par effet magnétique d'une fiche électrique complémentaire à ladite prise,
- Des moyens d'entraînement de ladite première architecture magnétique en rotation sur elle-même autour d'un axe, dit axe principal, perpendiculaire audit plan de connexion, agencés pour lui faire prendre plusieurs positions angulaires distinctes autour dudit axe principal, chaque position angulaire distincte étant alignée suivant une direction radiale distincte de chaque bloc de contact desdits premiers blocs de contacts électriques,
- Lesdits moyens d'actionnement étant configurés pour actionner lesdits moyens d'entraînement en rotation et pour déplacer chaque bloc de contact électrique desdits premiers blocs de contact électrique suivant sa direction radiale.

Selon une première réalisation, la prise comporte :
- Une pièce de protection des premiers blocs de contact électrique, actionnable en rotation sur elle-même autour de l'axe principal entre au moins une première position angulaire dans laquelle elle obture des accès à chacun des blocs de contact électrique desdits premiers blocs de contact électrique et une deuxième position angulaire dans laquelle elle libère chacun desdits accès,
- Lesdits moyens d'actionnement étant configurés pour entraîner en rotation ladite pièce de protection.

Selon une deuxième réalisation, la prise comporte :
- Une pièce de protection des premiers blocs de contact électrique, comprenant un corps fixe annulaire dotée de plusieurs ouvertures radiales situées chacune en vis-à-vis d'un bloc de contact électrique distinct desdits premiers blocs de contact électrique et plusieurs volets obturateurs chacun actionnable en mouvement entre au moins une première position dans laquelle il libère l'ouverture radiale auquel il est associé et une deuxième position dans laquelle il obture l'ouverture radiale auquel il est associé,
- Lesdits moyens d'actionnement étant configurés pour entraîner en mouvement les volets obturateurs.

Selon une particularité, la prise comporte :
- Une bague rotative, actionnable en rotation, agencé pour entraîner la première architecture magnétique en translation suivant l'axe principal entre une position basse et une position haute, via au moins un mécanisme de came et suiveur de came,
- Lesdits moyens d'actionnement étant configurés pour entraîner en rotation ladite bague rotative.

Selon une autre particularité, les moyens d'entraînement comportent une pièce d'entraînement rotative, coaxiale audit axe principal, et de laquelle ladite première architecture magnétique est solidaire en rotation.

L'invention concerne également un système de connexion électrique comportant une prise et une fiche connectable sur ladite prise, dans lequel :
- La prise est une prise à connexion électrique radiale telle que définie ci-dessus,
- La fiche comporte une deuxième architecture magnétique complémentaire à ladite première architecture magnétique appartenant à la prise et plusieurs deuxièmes blocs de contact électrique agencés suivant plusieurs directions radiales distinctes autour de l'axe principal,
- La première architecture magnétique et la deuxième architecture magnétique sont configurées pour faire prendre à la fiche une orientation déterminée autour de l'axe principal lorsque la fiche est collée contre la prise par effet magnétique,
- Chaque bloc de contact électrique desdits premiers blocs de contact électrique de la prise est agencé pour se connecter à un bloc de contact électrique distinct desdits deuxièmes blocs de contact électrique de la fiche, par translation suivant une direction radiale,
- Le système comporte des moyens de détection de l'orientation de la fiche lorsque celle-ci est collée magnétiquement à la prise, et des moyens de détermination de la position angulaire à conférer à ladite première architecture magnétique selon ladite orientation déterminée, parmi plusieurs positions angulaires distinctes,
- Ladite unité de commande est configurée pour contrôler les moyens d'actionnement en vue de :
   ∘ Positionner la première architecture magnétique dans la position angulaire déterminée,
   ∘ Déplacer chaque bloc de contact électrique desdits premiers blocs de contact électrique suivant sa direction radiale lorsque la première architecture magnétique est positionnée dans la position angulaire déterminée.

L'invention concerne également un procédé de connexion mis en œuvre dans un système de connexion électrique tel que défini ci-dessus, dans lequel la phase de connexion de la fiche sur la prise comporte les étapes suivantes :
- Collage mécanique de la fiche contre la prise par effet magnétique,
- Détection de l'orientation de la fiche par rapport à la prise autour de l'axe principal,
- Détermination de la position angulaire à conférer à ladite première architecture magnétique selon ladite orientation déterminée, parmi plusieurs positions angulaires distinctes,
- Si nécessaire, commande des moyens d'actionnement pour actionner les moyens d'entraînement en rotation de la première architecture magnétique pour la positionner selon la position angulaire déterminée,
- Commande des moyens d'actionnement pour déplacer chaque bloc de contact électrique desdits premiers blocs de contact électrique suivant sa direction radiale pour le connecter sur le bloc de contact électrique correspondant desdits deuxièmes blocs de contact électrique appartenant à la fiche.

Selon une particularité, le procédé de connexion comporte une étape de commande des moyens d'actionnement pour actionner en rotation la bague rotative pour faire passer la première architecture magnétique de sa position basse à sa position haute, préalablement à l'étape de collage mécanique de la fiche contre la prise.

Selon une autre particularité, le procédé de connexion comporte une étape de commande des moyens d'actionnement pour actionner en rotation la pièce de protection vers sa deuxième position angulaire et libérer les accès à chacun des blocs de contact électrique desdits premiers blocs de contact électrique.

L'invention concerne également un procédé de déconnexion mis en œuvre dans un système de connexion électrique tel que défini ci-dessus, dans lequel la phase de déconnexion de la fiche sur la prise comporte les étapes suivantes :
- Commande des moyens d'actionnement pour actionner en rotation la bague rotative et faire passer la première architecture magnétique de sa position haute à sa position basse,
- Commande des moyens d'actionnement pour actionner les moyens d'entraînement en rotation et faire tourner la première architecture magnétique d'un premier angle déterminé,
- Commande des moyens d'actionnement pour actionner chacun desdits premiers blocs de contact électrique et les déconnecter mécaniquement et électriquement des deuxièmes blocs de contact électrique.

Selon une particularité, le procédé de déconnexion comporte une étape de commande des moyens d'actionnement pour actionner en rotation la pièce de protection en vue d'obturer lesdits accès aux premiers blocs de contact électrique.

Selon une autre particularité, le procédé de déconnexion comporte une étape de commande des moyens d'actionnement pour actionner en rotation les moyens d'entraînement de la première architecture magnétique, d'un angle opposé audit premier angle.

### Brève description des figures

D'autres caractéristiques et avantages vont apparaître dans la description détaillée qui suit faite en regard des dessins annexés dans lesquels :
- La figure 1 représente de manière schématique le système de connexion électrique de l'invention ;
- La figure 2 montre une première vue en éclaté de la prise électrique et de la fiche employées dans le système de connexion électrique de l'invention ;
- La figure 3 montre une deuxième vue en éclaté de la prise électrique et de la fiche employées dans le système de connexion électrique de l'invention ;
- La figure 4 montre une vue en perspective de la prise sur laquelle est connectée la fiche ;
- La figure 5 montre la bague rotative employée dans la prise de l'invention ;
- Les figures 6A et 6B montrent respectivement l'architecture magnétique côté prise, respectivement en position basse et en position haute ;
- La figure 7 illustre une variante de réalisation de la pièce de protection employée dans la prise électrique de l'invention ;
- La figure 8 représente un exemple de réalisation des deux architectures magnétiques employées d'une part côté prise et d'autre part côté fiche ;

### Description détaillée d'au moins un mode de réalisation

L'invention s'applique de manière générale à un système de connexion électrique, pouvant notamment être employé dans une installation électrique destinée à la recharge d'un appareil électrique, tel que par exemple un véhicule électrique. D'autres applications pourraient bien entendu être envisagées.

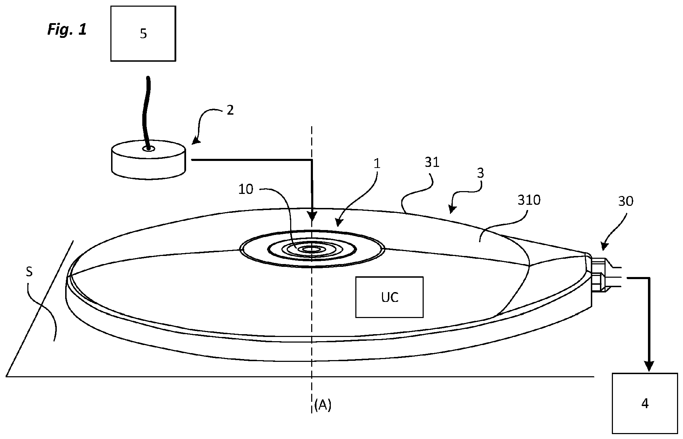

En référence à la figure 1, le système se compose de deux parties, l'une des deux parties étant destinée à être raccordée à un circuit électrique d'alimentation, par exemple raccordée au réseau 4, et l'autre partie étant destinée à être raccordée à un appareil électrique 5 à alimenter, par exemple un système d'alimentation d'un véhicule électrique ou hybride.

Toute solution de connexion électrique vers l'appareil électrique ou le circuit électrique d'alimentation pourra être envisagée, telle que câble, tige conductrice, ou autre solution équivalente...

La première partie du système comporte une prise électrique (ci-après désignée la prise 1) et la deuxième partie comporte une fiche électrique (ci-après désignée la fiche 2) destinée à être connectée mécaniquement et électriquement à la prise 1.

Le système permet avantageusement de connecter mécaniquement la fiche 2 sur la prise 1 de manière automatique, sans intervention d'un opérateur ou d'un robot, en utilisant uniquement des moyens magnétiques et gravitationnels.

Pour la suite de la description, on définit une direction d'assemblage, correspondant à un axe principal (A) selon lequel la fiche 2 vient en appui mécanique contre la prise 1.

Dans la suite de la description les termes "avant" et "arrière" ainsi que "haut" et "bas" et "supérieur" et "inférieur" sont à considérer en tenant compte de la position longitudinale selon l'axe principal (A).

Dans la suite de la description, les termes "intérieur" et "extérieur" sont à considérer selon la position coaxiale par rapport à l'axe principal (A).

Lorsque la fiche 2 est connectée sur la prise 1, la partie avant de la fiche 2 vient en appui mécanique contre la partie avant de la prise 1.

On définit un dispositif de connexion électrique intégrant la prise 1. Ce dispositif présente avantageusement un plateau 3 à poser sur un support (par exemple le sol S - l'axe principal (A) est alors orthogonale au sol). Le plateau 3 peut comporter un ou plusieurs connecteurs 30 lui permettant d'être relié au réseau électrique 4 et à un système de communication. Des liaisons électriques intégrées au plateau 3 permettent de relier la prise 1 électrique auxdits connecteurs 30.

En référence à la figure 1, le plateau 3 comporte une enveloppe 31 fermée dont la partie centrale est occupée par la prise 1.

La prise électrique 1 comporte une plage avant 10 par laquelle elle se connecte mécaniquement avec la fiche 2. Cette plage avant 10 peut être de toute forme adaptée, plane ou bombée, concave ou convexe.

L'enveloppe 31 est située en périphérie de la prise 1 et définit une surface avant 310 s'étendant en périphérie de la plage avant 10 de ladite prise 1. Cette surface avant 310 s'étend au-delà de la plage avant 10 de la prise 1 et n'est pas dédiée à la connexion. Sous cette surface, l'enveloppe 31 du dispositif intègre des moyens de guidage magnétiques et/ou mécaniques adaptés pour guider la fiche 2 vers la prise 1 lorsque la fiche 2 est en approche. De manière non limitative, la demande de brevet n°WO2017/216458A1 décrit un principe de fonctionnement dans lequel la fiche 2 vient se connecter à la prise 1, par exécution d'une séquence de commande des bobines intégrées à l'enveloppe.

La plage avant 10 de la prise 1 est orientée transversalement à l'axe principal (A). La surface avant 310 du plateau 3, autour de la prise 1, peut être plane dans le même plan que celle formée par la plage avant 10 de la prise 1, ou d'une forme bombée concave ou convexe (comme sur les figures annexées).

La prise 1 est dotée d'une première architecture magnétique 11 agencée transversalement à l'axe principal (A), lui permettant d'attirer la fiche 2, dotée pour sa part d'une deuxième architecture magnétique 21 correspondante. Lorsque la fiche 2 est collée par effet magnétique sur la prise 1, une connexion électrique est également réalisée entre des premiers blocs de contact électrique de la prise 1 et des deuxièmes blocs de contact électrique de la fiche 2.

Les deux architectures magnétiques utilisées permettent d'assurer le collage de la fiche 2 sur la prise 1 par effet magnétique. Différentes architectures magnétiques permettant le collage de la fiche 2 sur la prise 1 sont notamment décrites dans le brevet EP3317926B1 et dans la demande de brevet WO2020/229321A1**.** Celles-ci sont applicables à la présente invention mais sont à considérer de manière non limitative. Les deux architectures magnétiques comportent avantageusement plusieurs aimants permanents. Selon une particularité, les deux architectures magnétiques fonctionnent en attraction lorsque la fiche est dans une position angulaire adaptée par rapport à la prise pour établir la connexion, ou en répulsion lorsque la fiche doit être retirée par rapport à la prise lors de la déconnexion.

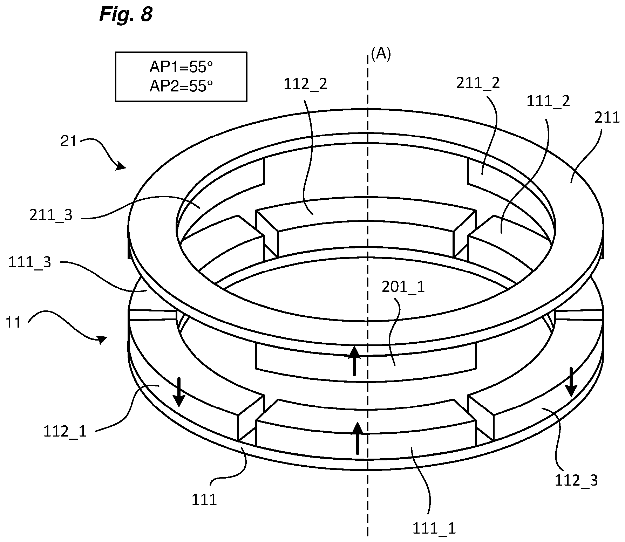

A titre d'exemple, la figure 8 montre la première architecture magnétique 11 présente côté prise 1 et la deuxième architecture magnétique 21 présente côté fiche 2. Les deux architectures magnétiques représentées comportent une culasse ferromagnétique 111, 211 et une ou plusieurs portions d'aimant permanent fixées sur ladite culasse.

Sur la première architecture magnétique, trois aimants permanents 111_1, 111_2, 111_3 d'un premier jeu s'étendent chacun par exemple sur une plage angulaire AP1 de 55° sur leur portion annulaire et trois aimants permanents 112_1, 112_2, 112_3 d'un deuxième jeu par exemple sur une plage angulaire AP2 de 55°.

Chacun des trois nouveaux aimants permanents du deuxième jeu vient s'intercaler entre deux aimants permanents du premier jeu, en laissant un intervalle angulaire régulier non nul avec ces deux aimants du premier jeu. L'intervalle angulaire I1 régulier est voisin de 5° entre deux aimants adjacents.

Les aimants permanents du premier jeu et ceux du deuxième jeu sont orientés magnétiquement suivant l'axe principal (A) et dans des sens opposés.

La deuxième architecture magnétique 21 présente uniquement un premier jeu de trois aimants permanents 211_1, 211_2, 211_3 qui sont identiques aux aimants permanents de la première architecture magnétique.

Il faut noter que les deux architectures magnétiques 11, 21 sont configurées pour assurer un collage de la fiche 2 contre la prise 1, par effet magnétique d'attraction, selon une orientation donnée, autour de l'axe principale. Les deux architectures magnétiques 11, 21 sont configurées de sorte que la fiche 2 peut prendre plusieurs positions angulaires distinctes lorsqu'elle est collée sur la prise 1 par effet magnétique.

Par exemple, à partir des architectures magnétiques présentées sur la figure 8, la fiche 2 peut prendre trois positions angulaires distinctes, décalées l'une de l'autre de 120°. La fiche 2 peut être dans une première position angulaire, dite à 0°, une deuxième position angulaire dite à -120° et dans une troisième position angulaire dite à +120°.

Bien entendu, les arrangements magnétiques (plages angulaires des aimants et intervalles angulaires entre aimants) de l'architecture magnétique peuvent être ajustés.

De manière arbitraire, on considère par exemple que la fiche 2 est orientée correctement par rapport à la prise 1 lorsqu'elle est dans sa position angulaire à 0°. Dans cette position, les premiers blocs de contact électrique associés à la prise 1 et les deuxièmes blocs de contact associés à la fiche 2 sont compatibles électriquement et la connexion électrique est conforme. Par exemple, des premiers contacts puissance côté prise sont connectés à des premiers contacts "puissance" côté fiche, des deuxièmes contact "puissance" côté prise sont connecté à des deuxièmes contacts "puissance" côté fiche et des contacts "données" côté prise sont connectés à des contacts "données" côté fiche. Bien entendu, selon le type de réseau électrique, d'autres configurations peuvent être possibles.

Selon l'invention, la connexion électrique entre la prise 1 et la fiche 2 est réalisée suivant plusieurs directions radiales. Des premiers blocs de contact électrique de la prise 1 viennent ainsi se connecter par déplacement radial à des deuxièmes blocs de contact électrique de la fiche 2.

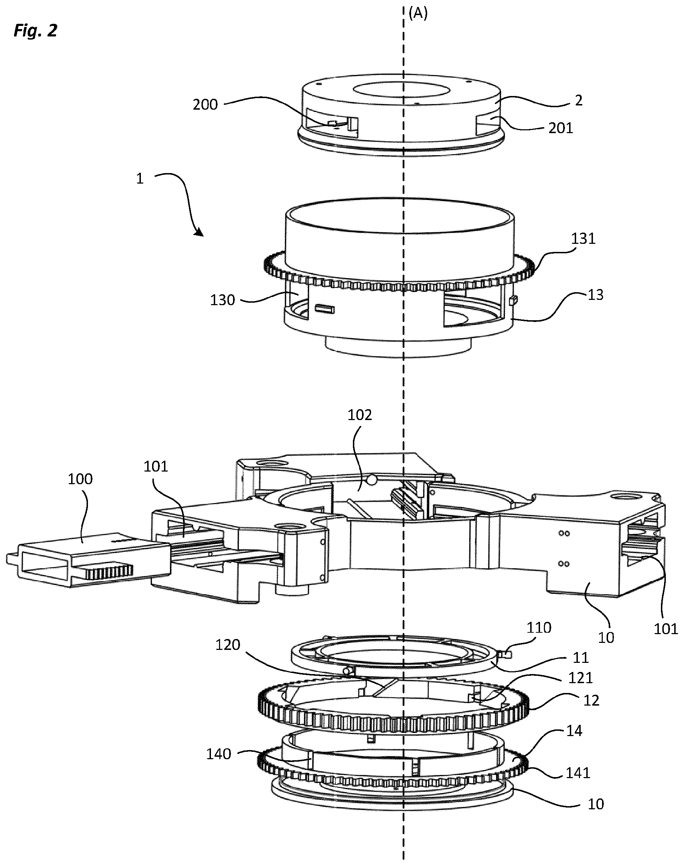

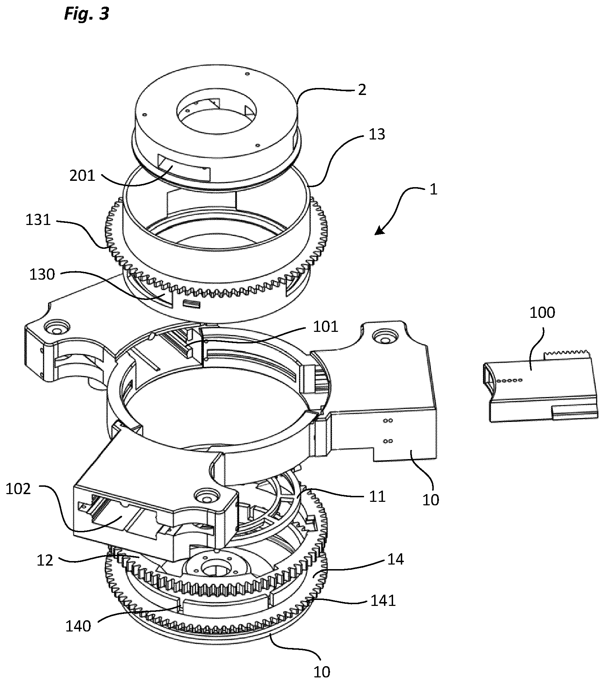

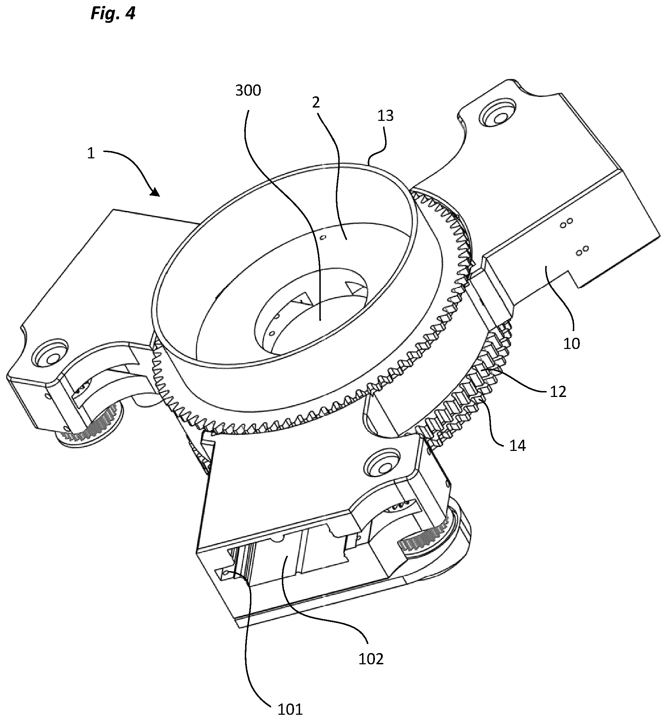

Selon l'invention, en référence à la figure 2, à la figure 3 et à la figure 4, la prise 1 comporte un corps 10 avantageusement intégré et fixé à l'enveloppe 31 du plateau 3 et un cœur logé dans ledit corps 10.

Le cœur de la prise comporte :
- La première architecture magnétique 11 actionnable en translation suivant l'axe principal (A) et en rotation autour de l'axe principal (A),
- Une bague 12 rotative de déplacement en translation de la première architecture magnétique 11, la bague 12 étant mobile en rotation sur elle-même autour de l'axe principal (A),
- Une pièce de protection 13 mobile en rotation sur elle-même autour de l'axe principal (A),
- Une pièce d'entraînement 14 actionnable en rotation sur elle-même autour de l'axe principal (A), de laquelle la première architecture magnétique est solidaire.

La pièce de protection 13 et la pièce d'entraînement 14 sont des pièces annulaires, positionnées de manière coaxiale à l'axe principal (A).

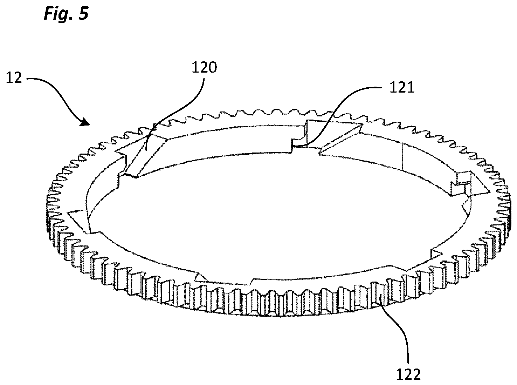

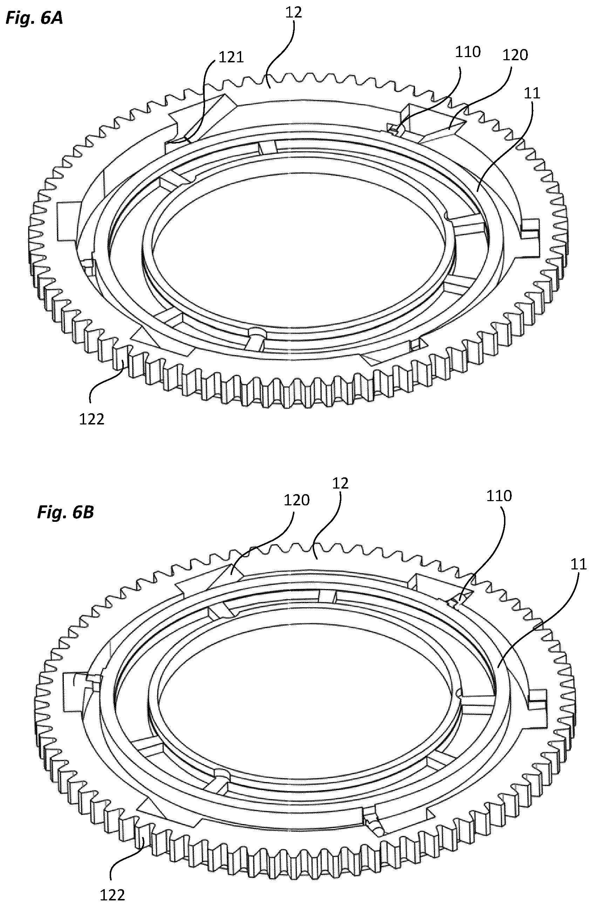

En référence à la figure 5, à la figure 6A et à la figure 6B, la bague 12 rotative comporte sur son pourtour plusieurs cames 120, coopérant avec des ergots 110 présents sur l'architecture magnétique, ces ergots 110 remplissant chacun la fonction de suiveur de came. Par les mécanismes de came/suiveur de came, la rotation de la bague 12 entraîne la translation de la première architecture magnétique suivant l'axe principal (A).

La translation de la première architecture magnétique suivant l'axe principal (A) est réalisée par l'intermédiaire de fentes 140 réalisées sur la pièce d'entraînement 14 (figure 2), coopérant chacune avec un ergot 110 distinct présent sur l'architecture magnétique 11.

La position basse (figure 6A) est prise lorsque la présence de la fiche 2 n'est pas détectée.

La position haute (figure 6B) est prise lorsque la présence de la fiche 2 est détectée, de manière à mettre la prise 1 en conditions de connexion avec la fiche 2.

La bague 12 rotative porte des moyens de verrouillage de la première architecture magnétique 11, dans sa position haute et dans sa position basse. En position basse, il peut s'agir d'une ou plusieurs encoches 121 agencées pour coopérer chacune avec un ergot 110 distinct porté par la première architecture magnétique 11.

La prise 1 comporte des premiers moyens d'actionnement en rotation de la bague 12 rotative. Ces premiers moyens d'actionnement peuvent comporter un moteur électrique (non représenté) et un mécanisme de crémaillère ou équivalent, comprenant des dents 122 réalisées sur le pourtour externe de la bague 12.

Les premiers blocs de contact électrique 100 sont logés dans le corps de la prise 1. Les premiers blocs de contact électrique 100 sont déplaçables chacun en translation dans un plan perpendiculaire à l'axe principal (A) et suivant une direction radiale distincte, perpendiculaire à l'axe principal (A). Les premiers blocs de contact électrique 100 sont par exemple au nombre de trois, chaque bloc comportant un ou plusieurs contacts électriques. Les trois premiers blocs de contact électrique sont par exemple décalés angulairement les uns des autres de 120°, autour de l'axe principal (A). Le corps 10 comporte plusieurs glissières 101 permettant une translation de chacun des premiers blocs de contact suivant sa direction radiale. Les figures 2 et 3 ne montrent qu'un seul des trois premiers blocs de contact électrique 100. Les glissières sont réalisées dans des ouvertures 102 radiales du corps 10 de la prise, à travers lesquelles chaque bloc de contact électrique 100 peut être translaté.

La pièce de protection 13 est agencée de manière coaxiale à la pièce d'entraînement 14. Ces deux pièces mobiles sont chacune de forme annulaire et peuvent chacune tourner sur elle-même de manière indépendante, autour de l'axe principal (A).

Le rôle de la pièce de protection 13 est de masquer les premiers blocs de contact électrique 100 et bloquer ainsi leur accès tant que la connexion mécanique de fiche 2 sur la prise 1 n'a pas été établie. La pièce de protection 13 est commandable en rotation sur elle-même autour de l'axe principal (A), pour se déplacer angulairement d'un angle non nul, par exemple fixé à 55°. Dans une première position angulaire, par exemple à 0°, la pièce de protection obture des accès aux premiers blocs de contact électrique 100, et dans une deuxième position, par exemple à 55°, elle libère les accès aux premiers blocs de contact électrique 100. La pièce de protection 13 comporte ainsi trois ouvertures 130 radiales, destinées à être traversées par les premiers blocs de contact électrique 100 lorsque la pièce de protection 13 est dans sa deuxième position.

La prise 1 comporte ainsi des deuxièmes moyens d'actionnement en rotation de la pièce de protection 13.

Ces deuxièmes moyens d'actionnement peuvent comporter un moteur électrique et un mécanisme de crémaillère ou équivalent, comprenant des dents 131 réalisées sur le pourtour externe de la pièce de protection.

La pièce d'entraînement 14 est utilisée pour entraîner en rotation la première architecture magnétique 11 appartenant à la prise 1. Elle est également actionnable en rotation sur elle-même autour de l'axe principal (A). En entraînant la première architecture magnétique 11 en rotation, elle entraîne également la rotation de la fiche 2 lorsque celle-ci est collée magnétiquement à la prise 1. Le rôle de la pièce d'entraînement 14 est, si nécessaire, de venir adapter l'orientation de la fiche 2 par rapport à la prise 1 et donc celle de ses deuxièmes blocs de contact électrique 200 par rapport aux premiers blocs de contact électrique 100 logés dans le corps de la prise 1. Autrement dit, lorsque la fiche 2 vient se coller mécaniquement, par effet magnétique, contre la prise 1, son orientation est incertaine à 120° près. Il peut donc s'avérer nécessaire de la repositionner pour que chacun de ses deuxièmes blocs de contact électrique 200 soit en vis-à-vis du bloc de contact électrique de la prise 1 qui lui correspond.

La pièce d'entraînement 14 est ainsi actionnable en rotation sur elle-même pour prendre trois positions angulaires distinctes, par exemple définies à 0°, -120° et +120°.

La prise 1 comporte des troisièmes moyens d'actionnement en rotation de la pièce d'entraînement 14. Ces troisièmes moyens d'actionnement peuvent comporter un moteur électrique et un mécanisme de crémaillère ou équivalent, comprenant des dents 141 réalisées sur le pourtour externe de la pièce d'entraînement 14.

La connexion électrique entre les premiers blocs de contact électrique de la prise 1 et les deuxièmes blocs de contact électrique 200 de la fiche 2 est réalisée suivant des directions radiales, décalées angulairement les unes des autres de 120°. Les deuxièmes blocs de contact électrique présents sur la fiche 2 sont ainsi rendues accessibles via des ouvertures radiales 201 réalisées à travers le corps de la fiche 2. Lors de la connexion, chaque bloc de contact électrique des premiers blocs de contact électrique traverse une ouverture radiale 201 distincte présente sur le corps de la fiche 2 pour venir se connecter sur un bloc de contact électrique distinct des deuxièmes blocs de contact électrique 200. La prise 1 comporte des quatrièmes moyens d'actionnement en translation de chaque bloc de contact électrique des premiers blocs de contact électrique 100. Ces quatrièmes moyens d'actionnement peuvent comporter une courroie (non représentée) entraînée par un moteur électrique et coopérant avec des engrenages présents au niveau de chaque bloc de contact électrique. L'entraînement de la courroie par un moteur électrique actionne de manière simultanée la translation de l'ensemble des blocs de contact électrique selon leur direction radiale.

Le système comporte une unité de commande UC (figure 1) configurée pour contrôler les moyens d'actionnement de la prise, c'est-à-dire les premiers moyens d'actionnement, les deuxièmes moyens d'actionnement, les troisièmes moyens d'actionnement et les quatrièmes moyens d'actionnement, en tenant compte de l'avancement de la séquence de connexion ou de l'avancement de la séquence de déconnexion. Cette unité de commande UC peut être logée dans l'enveloppe 31 et fait alors partie du dispositif de connexion intégrant la prise 1. Elle peut aussi être intégrée dans le corps 10 de la prise 1. Elle est configurée pour gérer le fonctionnement de la prise 1, notamment le mouvement de ses pièces et des blocs de contact, par commande des moteurs.

Les premiers moyens d'actionnement, les deuxièmes moyens d'actionnement, les troisièmes moyens d'actionnement et les quatrièmes moyens d'actionnement peuvent être définies, de manière générale, comme des moyens d'actionnement. Ils sont par exemple logés dans le corps 10 de la prise ou dans l'enveloppe 31 du dispositif.

La prise 1 comporte des moyens de détection de l'orientation de la fiche 2 par rapport à la prise 1, autour de l'axe principal. En fonction des données fournies par les moyens de détection et représentatives de cette orientation, l'unité de commande UC détermine si la fiche 2 doit être mise en rotation ou non, et le sens de rotation à appliquer à la fiche 2. La rotation de la fiche 2 est obtenue en faisant tourner la pièce d'entraînement 14 entre ses différentes positions angulaires lorsque la fiche 2 est collée magnétiquement à la prise 1.

Il faut noter que la prise 1 et la fiche 2 présentent toutes deux une ouverture centrale axiale, formant un passage central axial 300, même lorsque la fiche 2 est connectée sur la prise, ce passage 300 formant une zone d'évacuation par exemple pour récupérer des objets divers, pour drainer l'eau de pluie...

Bien entendu, l'unité de commande UC et les différents moyens d'actionnement sont alimentés électriquement, par exemple via le réseau ou tout autre moyen.

Partant de l'architecture décrite ci-dessous, la séquence de connexion est la suivante :
- Détection de la présence de la fiche 2 à proximité.
- Lorsque la présence de la fiche 2 est détectée, l'unité de commande UC contrôle les premiers moyens d'actionnement pour actionner la bague 12 rotative en rotation, la rotation de la bague 12 entraînant la translation de la première architecture magnétique 11 de sa position basse vers sa position haute (figure 6B). L'entraînement est réalisé jusqu'à verrouillage en position haute.
- La fiche 2 vient se coller mécaniquement contre la prise, par attraction magnétique entre les deux architectures magnétiques. La fiche 2 est collée dans une position angulaire à 120° près par rapport à la prise 1.
- L'unité de commande UC contrôle les deuxièmes moyens d'actionnement pour entraîner la rotation de la pièce de protection 13 et ainsi libérer les accès vers les premiers blocs de contact électrique 100, logés dans le corps 10.
- La pièce de protection 13 tourne par exemple d'un angle de 55°.
- A l'aide des données fournies par les moyens de détection, l'unité de commande UC détermine l'orientation de la fiche 2 par rapport à la prise 1.
- Si la fiche 2 n'est pas orientée correctement par rapport à la prise 1 (pas dans la position angulaire définie à 0° ci-dessus), l'unité de commande UC contrôle les troisièmes moyens d'actionnement pour entraîner la pièce d'entraînement 14 en rotation. En tournant, la pièce d'entraînement entraîne la rotation de la première architecture magnétique 11. La fiche 2 étant collée par effet magnétique, elle est également entraînée en rotation jusqu'à placer chacun de ses blocs de contact électrique 200 en vis-à-vis du bloc de contact électrique 100 correspondant de la prise 1.
- L'unité de commande UC contrôle les quatrièmes moyens d'actionnement pour entraîner en translation chaque bloc de contact électrique des premiers blocs de contact électrique 100 et assurer ainsi la connexion des premiers blocs de contact électrique 100 aux deuxièmes blocs de contact électrique 200 présents dans la fiche 2.
- Le système d'alimentation 5 est prêt à la charge.

Partant de l'architecture décrite ci-dessous, la séquence de déconnexion est la suivante :
- L'unité de commande UC contrôle les premiers moyens d'actionnement pour entraîner la rotation de la bague 12, déverrouiller la première architecture magnétique 11 et la ramener en position basse et ainsi la décoller magnétiquement de la deuxième architecture magnétique appartenant à la fiche 2.
- L'unité de commande UC contrôle les troisièmes moyens d'actionnement pour entraîner la pièce d'entraînement 14 en rotation, et ainsi faire tourner la première architecture magnétique 11. La rotation est effectuée d'un angle suffisant pour que les aimants permanents présents sur la première architecture magnétique 11 et ceux présents sur la deuxième architecture magnétique passent en répulsion. L'angle de rotation est par exemple de +60°.
- L'unité de commande UC contrôle les premiers moyens d'actionnement pour actionner la bague 12 rotative en rotation et verrouiller la première architecture magnétique 11 dans sa position basse (figure 6A).
- L'unité de commande UC contrôle les quatrièmes moyens d'actionnement pour rétracter les premiers blocs de contact électrique 100 et les déconnecter mécaniquement et électriquement des deuxièmes blocs de contact électrique 200.
- L'unité de commande UC contrôle les deuxièmes moyens d'actionnement pour entraîner la rotation de la pièce de protection 13 et venir fermer l'accès aux premiers blocs de contact électrique 100.
- La fiche 2 peut désormais être déconnectée mécaniquement.
- L'unité de commande UC contrôle les troisièmes moyens d'actionnement pour faire tourner la pièce d'entraînement 14 et remettre la première architecture magnétique dans sa position initiale à 0°.

Pour fonctionner, il est possible de mutualiser les moteurs électriques employés dans les moyens d'actionnement précités. Il est en effet possible d'utiliser un seul ou deux moteurs pour entraîner les différentes pièces de la prise. On peut par exemple imaginer utiliser un premier moteur électrique pour entraîner les différentes pièces (12, 13, 14) en rotation et un deuxième moteur électrique pour entraîner la translation des premiers blocs de contact électrique 100.

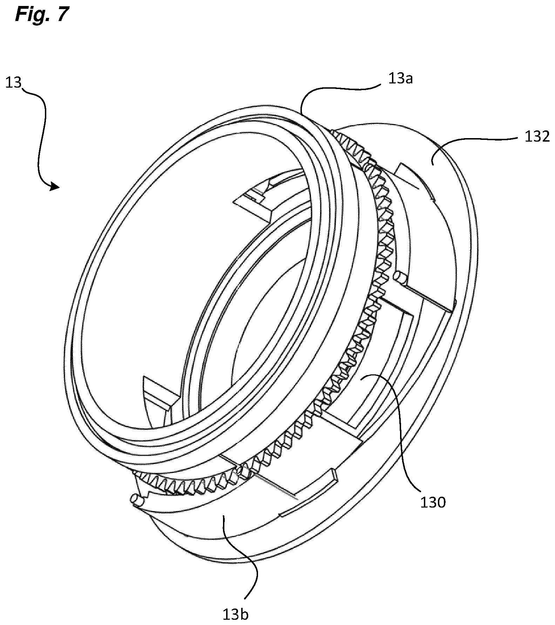

La figure 7 montre une variante de réalisation de la pièce de protection 13. Dans cette variante, la pièce de protection 13 comporte un corps 13a annulaire de forme identique à celle décrite ci-dessus en liaison avec les figures 1 à 6B, et des volets obturateurs 13b. Le corps 13a de la pièce de protection est positionné de manière fixe dans la prise électrique, de sorte que chacune de ses ouvertures radiales 130 est en vis-à-vis d'un bloc de contact électrique distinct des premiers blocs de contact électrique 100. Les volets 13b sont positionnés à l'extérieur du corps 13a de la pièce de protection, chacun associé à une ouverture radiale 130 distincte présente sur le corps. Chaque volet 13b est commandable entre deux positions, une première position dans laquelle il ferme l'ouverture radiale 130, bloquant l'accès au bloc de contact électrique correspondant et une deuxième position dans laquelle il libère l'ouverture radiale 130 et l'accès au bloc de contact correspondant. Le corps 13a annulaire peut disposer d'une collerette 132 formant une plage de support transversale et de guidage des volets.

Par ailleurs, le système peut comporter divers moyens adaptés pour gérer différents cas de dysfonctionnement, notamment les dysfonctionnements au niveau des moyens d'actionnement de la prise. On peut notamment citer la possibilité d'utiliser des moyens manuels d'actionnement de la bague 12, par exemple pour ramener la première architecture magnétique 11 vers sa position basse et ainsi faciliter la déconnexion du système, en cas de dysfonctionnement des moyens d'actionnement en rotation de la bague 12. Ces moyens peuvent comporter une clé à insérer dans le corps de la prise adaptée pour venir s'engrener avec la bague 12. Il serait aussi possible de prévoir une unité électrique d'alimentation de secours pour alimenter le système, notamment pour activer ses moteurs électriques. Cette unité peut être interne au système ou connectable de l'extérieur.

La solution de l'invention présente ainsi de nombreux avantages, parmi lesquels :
- Elle permet d'éviter un accès aux blocs de contact électrique de la prise lorsqu'ils ne sont pas utilisés ;
- La solution côté prise est particulièrement étanche car tous les accès peuvent être obturés ;
- Elle permet, sans contrainte mécanique, de permettre un positionnement de la fiche à 120° près ;
- Elle utilise des moyens d'actionnement classiques tels que crémaillère, moteur électrique, roues d'entraînement...
- Elle est originale dans sa conception, notamment du fait de la connexion radiale ;
- Elle permet de dégager un passage central axial pour assurer une évacuation d'eau, de débris, poussières et autres objets, sans perturber le fonctionnement du système ;

## Revendications

1. Prise (1) à connexion électrique radiale, **caractérisé en ce qu'**elle comporte :
- Un corps (10),
- Des moyens d'actionnement,
- Une unité de commande (UC) configurée pour contrôler lesdits moyens d'actionnement,
- Des premiers blocs de contact électrique (100) logés dans ledit corps, destinés à être reliés à un système d'alimentation électrique (4) et déplaçables en translation dans un même plan, dit plan de connexion, chacun suivant une direction radiale distincte,
- Une première architecture magnétique (11) apte à assurer un collage par effet magnétique d'une fiche (2) électrique complémentaire à ladite prise (1),
- Des moyens d'entraînement de ladite première architecture magnétique (11) en rotation sur elle-même autour d'un axe, dit axe principal (A), perpendiculaire audit plan de connexion, agencés pour lui faire prendre plusieurs positions angulaires distinctes autour dudit axe principal (A), chaque position angulaire distincte étant alignée suivant une direction radiale distincte de chaque bloc de contact desdits premiers blocs de contacts électriques (100),
- Lesdits moyens d'actionnement étant configurés pour actionner lesdits moyens d'entraînement en rotation et pour déplacer chaque bloc de contact électrique desdits premiers blocs de contact électrique (100) suivant sa direction radiale.

2. Prise à connexion électrique radiale selon la revendication 1, **caractérisée en ce qu'**elle comporte :
- Une pièce de protection (13) des premiers blocs de contact électrique (100), actionnable en rotation sur elle-même autour de l'axe principal (A) entre au moins une première position angulaire dans laquelle elle obture des accès à chacun des blocs de contact électrique desdits premiers blocs de contact électrique (100) et une deuxième position angulaire dans laquelle elle libère chacun desdits accès,
- Lesdits moyens d'actionnement étant configurés pour entraîner en rotation ladite pièce de protection (13).

3. Prise à connexion électrique radiale selon la revendication 1, **caractérisée en ce qu'**elle comporte :
- Une pièce de protection (13) des premiers blocs de contact électrique (100), comprenant un corps (13a) fixe annulaire dotée de plusieurs ouvertures radiales situées chacune en vis-à-vis d'un bloc de contact électrique distinct desdits premiers blocs de contact électrique (100) et plusieurs volets obturateurs (13b) chacun actionnable en mouvement entre au moins une première position dans laquelle il libère l'ouverture radiale auquel il est associé et une deuxième position dans laquelle il obture l'ouverture radiale auquel il est associé,
- Lesdits moyens d'actionnement étant configurés pour entraîner en mouvement les volets obturateurs.

4. Prise à connexion électrique radiale selon l'une des revendications 1 à 3, **caractérisée en ce qu'**elle comporte :
- Une bague (12) rotative, actionnable en rotation, agencé pour entraîner la première architecture magnétique (11) en translation suivant l'axe principal entre une position basse et une position haute, via au moins un mécanisme de came et suiveur de came,
- Lesdits moyens d'actionnement étant configurés pour entraîner en rotation ladite bague (12) rotative.

5. Prise à connexion électrique radiale selon l'une des revendications 1 à 4, **caractérisée en ce que** les moyens d'entraînement comportent une pièce d'entraînement (14) rotative, coaxiale audit axe principal (A), et de laquelle ladite première architecture magnétique (11) est solidaire en rotation.

6. Système de connexion électrique comportant une prise (1) et une fiche (2) connectable sur ladite prise, **caractérisé en ce que** :
- La prise (1) est une prise à connexion électrique radiale telle que définie dans l'une des revendications 1 à 4,
- La fiche (2) comporte une deuxième architecture magnétique (21) complémentaire à ladite première architecture magnétique appartenant à la prise (1) et plusieurs deuxièmes blocs de contact électrique (200) agencés suivant plusieurs directions radiales distinctes autour de l'axe principal (A),
- La première architecture magnétique (11) et la deuxième architecture magnétique sont configurées pour faire prendre à la fiche (2) une orientation déterminée autour de l'axe principal (A) lorsque la fiche (2) est collée contre la prise (1) par effet magnétique,
- Chaque bloc de contact électrique desdits premiers blocs de contact électrique (100) de la prise (1) est agencé pour se connecter à un bloc de contact électrique distinct desdits deuxièmes blocs de contact électrique (200) de la fiche, par translation suivant une direction radiale,
- Le système comporte des moyens de détection de l'orientation de la fiche (2) lorsque celle-ci est collée magnétiquement à la prise (1), et des moyens de détermination de la position angulaire à conférer à ladite première architecture magnétique (11) selon ladite orientation déterminée, parmi plusieurs positions angulaires distinctes,
- Ladite unité de commande (UC) est configurée pour contrôler les moyens d'actionnement en vue de :
∘ Positionner la première architecture magnétique (11) dans la position angulaire déterminée,
∘ Déplacer chaque bloc de contact électrique desdits premiers blocs de contact électrique (100) suivant sa direction radiale lorsque la première architecture magnétique (11) est positionnée dans la position angulaire déterminée.

7. Procédé de connexion mis en œuvre dans un système de connexion électrique tel que défini dans la revendication 6, **caractérisé en ce qu'**il comporte une phase de connexion de la fiche (2) sur la prise (1) qui comporte les étapes suivantes :
- Collage mécanique de la fiche (2) contre la prise (1) par effet magnétique,
- Détection de l'orientation de la fiche (2) par rapport à la prise autour de l'axe principal (A),
- Détermination de la position angulaire à conférer à ladite première architecture magnétique (11) selon ladite orientation déterminée, parmi plusieurs positions angulaires distinctes,
- Si nécessaire, commande des moyens d'actionnement pour actionner les moyens d'entraînement en rotation de la première architecture magnétique (11) pour la positionner selon la position angulaire déterminée,
- Commande des moyens d'actionnement pour déplacer chaque bloc de contact électrique desdits premiers blocs de contact électrique (100) suivant sa direction radiale pour le connecter sur le bloc de contact électrique correspondant desdits deuxièmes blocs de contact électrique (200) appartenant à la fiche (2).

8. Procédé selon la revendication 7, **caractérisé en ce qu'**il comporte une étape de commande des moyens d'actionnement pour actionner en rotation la bague (12) rotative pour faire passer la première architecture magnétique (11) de sa position basse à sa position haute, préalablement à l'étape de collage mécanique de la fiche (2) contre la prise (1).

9. Procédé selon la revendication 7 ou 8, **caractérisé en ce qu'**il comporte une étape de commande des moyens d'actionnement pour actionner en rotation la pièce de protection (13) vers sa deuxième position angulaire et libérer les accès à chacun des blocs de contact électrique desdits premiers blocs de contact électrique (100).

10. Procédé de déconnexion mis en œuvre dans un système de connexion électrique tel que défini dans la revendication 6, **caractérisé en ce qu'**il comporte une phase de déconnexion de la fiche (2) par rapport à la prise (1) qui comporte les étapes suivantes :
- Commande des moyens d'actionnement pour actionner en rotation la bague (12) rotative et faire passer la première architecture magnétique (11) de sa position haute à sa position basse,
- Commande des moyens d'actionnement pour actionner les moyens d'entraînement en rotation et faire tourner la première architecture magnétique (11) d'un premier angle déterminé,
- Commande des moyens d'actionnement pour actionner chacun desdits premiers blocs de contact électrique (100) et les déconnecter mécaniquement et électriquement des deuxièmes blocs de contact électrique (200).

11. Procédé selon la revendication 10, **caractérisé en ce qu'**il comporte une étape de commande des moyens d'actionnement pour actionner en rotation la pièce de protection (13) en vue d'obturer lesdits accès aux premiers blocs de contact électrique (100).

12. Procédé selon la revendication 10 ou 11, **caractérisé en ce qu'**il comporte une étape de commande des moyens d'actionnement pour actionner en rotation les moyens d'entraînement de la première architecture magnétique (11), d'un angle opposé audit premier angle.

## Patentansprüche

1. Steckdose (1) mit radialer elektrischer Verbindung, **dadurch gekennzeichnet, dass** sie aufweist:
- einen Körper (10),
- Betätigungsmittel,
- eine Steuereinheit (UC), die dafür ausgelegt ist, die Betätigungsmittel zu steuern,
- erste elektrische Kontaktblöcke (100), die in dem Körper aufgenommen sind, dazu bestimmt sind, mit einem Stromversorgungssystem (4) verbunden zu werden, und in ein und derselben Ebene, Verbindungsebene genannt, jeweils in einer anderen radialen Richtung translatorisch verlagerbar sind,
- eine erste magnetische Architektur (11), die geeignet ist, ein Andrücken eines elektrischen Steckers (2), der zu der Steckdose (1) komplementär ist, durch Magnetwirkung sicherzustellen,
- Antriebsmittel zur Drehung der ersten magnetischen Architektur (11) um sich selbst um eine zu der Verbindungsebene senkrechte Achse, Hauptachse (A) genannt, die dazu eingerichtet sind, sie mehrere verschiedene Winkelpositionen um die Hauptachse (A) einnehmen zu lassen, wobei jede der verschiedenen Winkelpositionen entlang einer radialen Richtung eines anderen Kontaktblocks von den ersten elektrischen Kontaktblöcken (100) ausgerichtet ist,
- wobei die Betätigungsmittel dafür ausgelegt sind, die Antriebsmittel rotatorisch zu betätigen und jeden elektrischen Kontaktblock von den ersten elektrischen Kontaktblöcken (100) in seiner radialen Richtung zu verlagern.

2. Steckdose mit radialer elektrischer Verbindung nach Anspruch 1, **dadurch gekennzeichnet, dass** sie aufweist:
- ein Schutzteil (13) der ersten elektrischen Kontaktblöcke (100), das um sich selbst um die Hauptachse (A) rotatorisch betätigbar ist zwischen mindestens einer ersten Winkelposition, in der es Zugänge zu jedem der elektrischen Kontaktblöcke von den ersten elektrischen Kontaktblöcken (100) verschließt, und einer zweiten Winkelposition, in der es jeden dieser Zugänge freigibt,
- wobei die Betätigungsmittel dafür ausgelegt sind, das Schutzteil (13) drehend anzutreiben.

3. Steckdose mit radialer elektrischer Verbindung nach Anspruch 1, **dadurch gekennzeichnet, dass** sie aufweist:
- ein Schutzteil (13) der ersten elektrischen Kontaktblöcke (100), das einen ringförmigen ortsfesten Körper (13a) umfasst, der mit mehreren radialen Öffnungen versehen ist, die sich jeweils gegenüber einem anderen elektrischen Kontaktblock von den ersten elektrischen Kontaktblöcken (100) befinden, und mit mehreren Verschlussklappen (13b), von denen jede für eine Bewegung zwischen mindestens einer ersten Position, in der sie die radiale Öffnung, der sie zugeordnet ist, freigibt, und einer zweiten Position, in der sie die radiale Öffnung, der sie zugeordnet ist, verschließt, betätigbar ist,
- wobei die Betätigungsmittel dafür ausgelegt sind, die Verschlussklappen zur Bewegung anzutreiben.

4. Steckdose mit radialer elektrischer Verbindung nach einem der Ansprüche 1 bis 3, **dadurch gekennzeichnet, dass** sie aufweist:
- einen rotatorisch betätigbaren Drehring (12), der dazu eingerichtet ist, die erste magnetische Architektur (11) über mindestens einen Nocken-Nockenfolger-Mechanismus entlang der Hauptachse zwischen einer niedrigen Position und einer hohen Position translatorisch anzutreiben,
- wobei die Betätigungsmittel dafür ausgelegt sind, den Drehring (12) drehend anzutreiben.

5. Steckdose mit radialer elektrischer Verbindung nach einem der Ansprüche 1 bis 4, **dadurch gekennzeichnet, dass** die Antriebsmittel ein drehbares Antriebsteil (14) aufweisen, das mit der Hauptachse (A) koaxial ist und mit dem die erste magnetische Architektur (11) drehfest verbunden ist.

6. System zur elektrischen Verbindung, das eine Steckdose (1) und einen mit der Steckdose verbindbaren Stecker (2) aufweist, **dadurch gekennzeichnet, dass**:
- die Steckdose (1) eine solche Steckdose mit radialer elektrischer Verbindung ist, wie in einem der Ansprüche 1 bis 4 definiert,
- der Stecker (2) eine zweite magnetische Architektur (21) aufweist, die zu der zur Steckdose (1) gehörenden ersten magnetischen Architektur komplementär ist, und mehrere zweite elektrische Kontaktblöcke (200), die in mehreren verschiedenen radialen Richtungen um die Hauptachse (A) herum angeordnet sind,
- die erste magnetische Architektur (11) und die zweite magnetische Architektur dafür ausgelegt sind zu bewirken, dass der Stecker (2) eine bestimmte Ausrichtung um die Hauptachse (A) erfährt, wenn der Stecker (2) durch Magnetwirkung gegen die Steckdose (1) gedrückt wird,
- jeder elektrische Kontaktblock von den ersten elektrischen Kontaktblöcken (100) der Steckdose (1) dazu eingerichtet ist, sich mit einem anderen elektrischen Kontaktblock von den zweiten elektrischen Kontaktblöcken (200) des Steckers durch Translation in einer radialen Richtung zu verbinden,
- das System Mittel zur Erkennung der Ausrichtung des Steckers (2), wenn dieser magnetisch an die Steckdose (1) angedrückt wird, und Mittel zur Bestimmung der Winkelposition von mehreren verschiedenen Winkelpositionen, die der ersten magnetischen Architektur (11) entlang dieser bestimmten Ausrichtung zu verleihen ist, aufweist,
- die Steuereinheit (UC) dafür ausgelegt ist, die Betätigungsmittel zu steuern zum:
∘ Positionieren der ersten magnetischen Architektur (11) in der bestimmten Winkelposition,
∘ Verlagern jedes elektrischen Kontaktblocks von den ersten elektrischen Kontaktblöcken (100) in seiner radialen Richtung, wenn die erste magnetische Architektur (11) in der bestimmten Winkelposition positioniert ist.

7. Verfahren zur Verbindung, das in einem System zur elektrischen Verbindung, wie in Anspruch 6 definiert, durchgeführt wird, **dadurch gekennzeichnet, dass** es eine Phase der Verbindung des Steckers (2) mit der Steckdose (1) aufweist, welche die folgenden Schritte umfasst:
- mechanisches Andrücken des Steckers (2) an die Steckdose (1) durch Magnetwirkung,
- Erkennung der Ausrichtung des Steckers (2) bezüglich der Steckdose um die Hauptachse (A),
- Bestimmung der Winkelposition von mehreren verschiedenen Winkelpositionen, die der ersten magnetischen Architektur (11) entlang dieser bestimmten Ausrichtung zu verleihen ist,
- falls erforderlich, Steuerung der Betätigungsmittel, um die Antriebsmittel zur Drehung der ersten magnetischen Architektur (11) zu betätigen, um diese in der bestimmten Winkelposition zu positionieren,
- Steuerung der Betätigungsmittel, um jeden elektrischen Kontaktblock von den ersten elektrischen Kontaktblöcken (100) in seiner radialen Richtung zu positionieren, um ihn mit dem entsprechenden elektrischen Kontaktblock von den zweiten elektrischen Kontaktblöcken (200), die zu dem Stecker (2) gehören, zu verbinden.

8. Verfahren nach Anspruch 7, **dadurch gekennzeichnet, dass** es einen Schritt der Steuerung der Betätigungsmittel umfasst, um den Drehring (12) rotatorisch zu betätigen, um vor dem Schritt des mechanischen Andrückens des Steckers (2) an die Steckdose (1) zu bewirken, dass sich die erste magnetische Architektur (11) aus ihrer niedrigen Position in ihre hohe Position bewegt.

9. Verfahren nach Anspruch 7 oder 8, **dadurch gekennzeichnet, dass** es einen Schritt der Steuerung der Betätigungsmittel umfasst, um das Schutzteil (13) zu seiner zweiten Winkelposition hin rotatorisch zu betätigen und die Zugänge zu jedem der elektrischen Kontaktblöcke von den ersten elektrischen Kontaktblöcken (100) freizugeben.

10. Verfahren zur Trennung, das in einem System zur elektrischen Verbindung, wie in Anspruch 6 definiert, durchgeführt wird, **dadurch gekennzeichnet, dass** es eine Phase der Trennung des Steckers (2) von der Steckdose (1) aufweist, welche die folgenden Schritte umfasst:
- Steuerung der Betätigungsmittel, um den Drehring (12) rotatorisch zu betätigen und zu bewirken, dass sich die erste magnetische Architektur (11) aus ihrer honen Position in ihre niedrige Position bewegt,
- Steuerung der Betätigungsmittel, um die Antriebsmittel rotatorisch zu betätigen und zu bewirken, dass sich die erste magnetische Architektur (11) um einen bestimmten ersten Winkel dreht,
- Steuerung der Betätigungsmittel, um jeden der ersten elektrischen Kontaktblöcke (100) zu betätigen und sie mechanisch und elektrisch von den zweiten elektrischen Kontaktblöcken (200) zu trennen.

11. Verfahren nach Anspruch 10, **dadurch gekennzeichnet, dass** es einen Schritt der Steuerung der Betätigungsmittel umfasst, um das Schutzteil (13) rotatorisch zu betätigen, um die Zugänge zu den ersten elektrischen Kontaktblöcken (100) zu verschließen.

12. Verfahren nach Anspruch 10 oder 11, **dadurch gekennzeichnet, dass** es einen Schritt der Steuerung der Betätigungsmittel umfasst, um die Antriebsmittel der ersten magnetischen Architektur (11) um einen zu dem ersten Winkel entgegengesetzten Winkel rotatorisch zu betätigen.

## Claims

1. Radially connected electrical socket (1), **characterized in that** it comprises:
- a body (10),
- actuating means,
- a control unit (UC) configured to control said actuating means,
- first electrical contact members (100), which are housed in said body, intended to be connected to an electrical supply system (4) and translatable in the same plane, called the connection plane, each in a distinct radial direction,
- a first magnetic architecture (11) capable of ensuring bonding, via a magnetic effect, of an electrical plug (2) complementary to said socket (1),
- means for driving rotation of said first magnetic architecture (11) on itself about an axis, called the principal axis (A), perpendicular to said connection plane, which are arranged to make it assume a plurality of distinct angular positions about said principal axis (A), each distinct angular position being aligned in a distinct radial direction with each contact member of said first electrical contact members (100),
- said actuating means being configured to actuate said rotation-driving means, and to move each electrical contact member of said first electrical contact members (100) in its radial direction.

2. Radially connected electrical socket according to Claim 1, **characterized in that** it comprises:
- a part (13) for protecting the first electrical contact members (100), which is able to be actuated to rotate on itself about the principal axis (A) between at least a first angular position in which it occludes accesses to each of the electrical contact members of said first electrical contact members (100) and a second angular position in which it frees each of said accesses,
- said actuating means being configured to drive rotation of said protecting part (13).

3. Radially connected electrical socket according to Claim 1, **characterized in that** it comprises:
- a part (13) for protecting the first electrical contact members (100), comprising a fixed annular body (13a) equipped with a plurality of radial apertures each located facing one distinct electrical contact member of said first electrical contact members (100) and a plurality of occluding shutters (13b) each able to be actuated to move between at least a first position in which it frees the radial aperture with which it is associated and a second position in which it occludes the radial aperture with which it is associated,
- said actuating means being configured to drive motion of the occluding shutters.

4. Radially connected electrical socket according to one of Claims 1 to 3, **characterized in that** it comprises:
- a rotary ring (12), which is able to be actuated to rotate, and which is arranged to drive translation of the first magnetic architecture (11) along the principal axis between a low position and a high position, via at least one cam and cam follower mechanism,
- said actuating means being configured to drive rotation of said rotary ring (12).

5. Radially connected electrical socket according to one of Claims 1 to 4, **characterized in that** the driving means comprise a rotary driving part (14) coaxial with said principal axis (A), and with which said first magnetic architecture (11) rotates as one.

6. Electrical connecting system comprising a socket (1) and a plug (2) connectable to said socket, **characterized in that**:
- the socket (1) is a radially connected electrical socket such as defined in one of Claims 1 to 4,
- the plug (2) comprises a second magnetic architecture (21) complementary to said first magnetic architecture belonging to the socket (1) and a plurality of second electrical contact members (200) arranged in a plurality of distinct radial directions about the principal axis (A),
- the first magnetic architecture (11) and second magnetic architecture are configured to make the plug (2) assume a defined orientation about the principal axis (A) when the plug (2) is bonded against the socket (1) via the magnetic effect,
- each electrical contact member of said first electrical contact members (100) of the socket (1) is arranged to be connected to one distinct electrical contact member of said second electrical contact members (200) of the plug, via translation in a radial direction,
- the system comprises means for detecting the orientation of the plug (2) when the latter is magnetically bonded to the socket (1), and means for determining the angular position to be imparted to said first magnetic architecture (11) depending on said determined orientation, among a plurality of distinct angular positions,
- said control unit (UC) is configured to control the actuating means with a view to:
∘ positioning the first magnetic architecture (11) in the determined angular position,
∘ moving each electrical contact member of said first electrical contact members (100) in its radial direction when the first magnetic architecture (11) is positioned in the determined angular position.

7. Connecting method implemented in an electrical connecting system such as defined in Claim 6, **characterized in that** it comprises a phase of connecting the plug (2) to the socket (1) that comprises the following steps:
- mechanically bonding the plug (2) against the socket (1) via a magnetic effect,
- detecting the orientation of the plug (2) with respect to the socket about the principal axis (A),
- determining the angular position to be imparted to said first magnetic architecture (11) depending on said determined orientation, among a plurality of distinct angular positions,
- if necessary, controlling the actuating means so as to actuate the means for driving rotation of the first magnetic architecture (11) so as to position it in the determined angular position,
- controlling the actuating means so as to move each electrical contact member of said first electrical contact members (100) in its radial direction so as to connect it to the corresponding electrical contact member of said second electrical contact members (200) belonging to the plug (2).

8. Method according to Claim 7, **characterized in that** it comprises a step of controlling the actuating means so as to actuate rotation of the rotary ring (12) so as to make the first magnetic architecture (11) pass from its low position to its high position, prior to the step of mechanically bonding the plug (2) against the socket (1).

9. Method according to Claim 7 or 8, **characterized in that** it comprises a step of controlling the actuating means so as to actuate rotation of the protecting part (13) to its second angular position and to free the accesses to each of the electrical contact members of said first electrical contact members (100).

10. Disconnecting method implemented in an electrical connecting system such as defined in Claim 6, **characterized in that** it comprises a phase of disconnecting the plug (2) from the socket (1) that comprises the following steps:
- controlling the actuating means so as to actuate rotation of the rotary ring (12) and to make the first magnetic architecture (11) pass from its high position to its low position,
- controlling the actuating means so as to actuate the rotation-driving means and to make the first magnetic architecture (11) rotate by a defined first angle,
- controlling the actuating means so as to actuate each of said first electrical contact members (100) and mechanically and electrically disconnect them from the second electrical contact members (200).

11. Method according to Claim 10, **characterized in that** it comprises a step of controlling the actuating means so as to actuate rotation of the protecting part (13) with a view to occluding said accesses to the first electrical contact members (100).

12. Method according to Claim 10 or 11, **characterized in that** it comprises a step of controlling the actuating means so as to actuate rotation of the means for driving the first magnetic architecture (11), by an angle opposite to said first angle.
